Europäisches Patentamt

European Patent Office

Office européen des brevets

(11) Publication number: **0 239 464 B1**

# EUROPEAN PATENT SPECIFICATION

(45) Date of publication of patent specification: **15.01.92** (51) Int. Cl.⁵: **G01V 1/40**, G01V 11/00

(21) Application number: **87400545.7**

(22) Date of filing: **12.03.87**

(54) **Seismic and logging tool and method.**

(30) Priority: **13.03.86 US 839835**

(43) Date of publication of application:
**30.09.87 Bulletin 87/40**

(45) Publication of the grant of the patent:
**15.01.92 Bulletin 92/03**

(84) Designated Contracting States:
**DE FR GB IT NL**

(56) References cited:
**US-A- 3 564 914**
**US-A- 4 563 757**

(73) Proprietor: **SCHLUMBERGER LIMITED**
**277 Park Avenue**
**New York, N.Y. 10172(US)**

(84) Designated Contracting States:
**DE GB NL**

Proprietor: **SOCIETE DE PROSPECTION ELEC-**
**TRIOUE SCHLUMBERGER**
**42, rue Saint-Dominique**
**F-75340 Paris Cédex 07(FR)**

(84) Designated Contracting States:
**FR IT**

(72) Inventor: **Rumrill, Paul J.**
**6445 Colebridge Road**
**Atlanta Georgia 30328(US)**

(74) Representative: **Hagel, Francis**
**Etudes et Productions Schlumberger A**
**L'ATTENTION DU SERVICE BREVETS 26, rue**
**de la Cavée B.P. 202**
**F-92142 Clamart Cédex(FR)**

# Description

The present invention relates to geological prospecting equipment. More particularly, the present invention relates to a downhole tool for taking seismic readings and well logs.

In the field of geological prospecting, particularly drilling for petroleum products, a variety of methods and devices are used to identify the type and properties of geological formations. Two of the most important are the taking of seismic readings and the logging of the well.

US-A-4 563 757 describes a single seismic tool which can be used to form a vertical seismic profile. US-A-3 564 914 describes a combination of logging tools for making acoustic and resistivity measurements where the two logs are alternatively switched.

Seismic readings are taken to determine the speed, intensity and frequency of seismic waves through formations, which in turn reveals information about the characteristics of the formations. A number of types of seismic tests are run, such as check shot surveys and vertical seismic profiles (VSP). Both types of seismic tests involve the use of a seismic source generator such as an air gun or vibrator on the surface and a receiver mounted in a seismic tool which is run downhole. Seismic acoustic energy or "shots" are emitted by the generator and received by the tool over a number of levels, and the results at each level are compared to give indications of the characteristics of the formations.

A check shot survey is used to verify the transit times of a seismic wave to a certain depth in the borehole. This transit time will help in correlating earlier determined surface seismic surveys to the proper depth. The surface seismic survey is generally taken prior to the well being drilled, by measuring the speed and intensity of seismic waves generated at the surface as they are reflected back toward the surface by the various strata of the formation. A surface seismic survey can provide an estimation of the transit time of a seismic wave from the surface to a given depth. The check shot survey is used to increase the accuracy of this transit time estimation by actually lowering the seismic tool to that given depth and firing a generator such as an air gun at the surface to measure the transit time required for the seismic waves to reach the seismic tool.

A VSP produces data which is used to partially predict the lithology of formations below the bottom of the borehole. When an air gun sends a seismic wave into the earth's surface, it is reflected upward by bed boundaries below the bottom of the borehole and is received by the seismic tool in the borehole. The energy of the wave reflected by the bed boundary depends on the thickness and density of the bed boundary. For example, a thick layer of tightly packed sand will reflect most of the seismic wave back towards the seismic tool, and the seismic tool will record the energy of the wave. Thus, the harder the seismic wave "bounces" off of the bed boundary, the greater the energy of the seismic wave received by the seismic tool. A VSP is usually used when the well is near completion to give geologists an idea of how much deeper the well must be drilled to reach the bed boundaries which determine the location of hydrocarbon-containing layers and to determine what those bed boundaries might be.

The second fundamental operation is the logging of a well. A logging operation also uses a downhole tool, but generally involves providing a stimulus to a particular level with the logging tool and then measuring the reaction of the geological formation to the stimulus. Logging provides details regarding the nature of the formation. A wide variety of stimuli are used to make the log, such as neutron porosity tests, dipmeter tests and electrical stimulus tests.

While seismic measurements and log measurements differ in their purposes, methods of creation, and methods of recording, the two operations do have one thing in common - they both require that a device be lowered downhole to perform the operation. There exists, therefore, the opportunity to combine a logging tool and seismic tool into a single downhole tool. However, no such combination exists.

Major economic advantages can be realized by combining seismic and logging operations into a single tool. Normally, seismic tools and logging tools are separate pieces of equipment which are lowered into boreholes separately during the drilling of a well. Separate crews for logging and seismic operations must travel from well to well carrying the equipment necessary to perform seismic surveys or logging operations. The crews also usually carry separate data processing equipment for interpretation of the log data or seismic data at the borehole site. Because of the sophistication of present day logging and seismic operations, the operators of the equipment must be specially trained and educated to run the seismic and log tests.

During the logging or seismic survey, the drilling rig must be stopped so the seismic or logging tools can be run downhole. However, even though the rig is stopped, the cost of running the rig continues to mount. Therefore, it is desirable to shorten the length of time that the rig is not running as much as possible. By combining the seismic and logging tools into a single tool capable of performing both operations, it is estimated that $4\frac{1}{2}$ to 5 hours of rig time is saved for every 10,000 feet of borehole surveyed and/or logged when compared to running separate tools downhole. This savings is compounded because the specialized equipment and operators of separate logging and seismic tools are needed for a shorter period of time. Further, great savings are realized by combining logging and seismic crews to eliminate duplicative equipment and personnel.

Another time consuming operation used in the prior art involves the means for steadying a seismic tool in a borehole while the seismic source is fired. The seismic tool must be held steady for the geophones inside the tool to pick up and accurately transit the seismic pulses. The seismic tool must also be held steady after the initial seismic wave hits the tool, because later seismic pulses will be received which are important to record. Traditionally, the seismic tool is lowered to the desired depth and a series of pressure pads are extended against the side of the borehole. The cable lowering the tool is then allowed to go slack so that the tool is held at the level by the pressure pads, which dig into the borehole walls. The gun is then fired and data readings taken. Finally, the cable is tightened and the pressure pads are withdrawn so the seismic tool can be moved to another location. The pressurizing and depressurizing of the pads and the slackening and tightening of the cable are relatively time consuming processes.

However, when the logging tools and a seismic tool are combined into a single downhole tool, a bow spring can be used to accomplish the steadying necessary to fire the shot. The use of bow springs is known in the art only in connection with certain types of logging tools. One of the reasons that pressure pads are used on seismic tools is that a seismic tool is relatively light and will bounce both horizontally and vertically when being moved through a borehole. However, the combination of seismic and logging tools makes the downhole tool relatively heavy and minimizes vertical "bobbing" of the downhole tool. Since the objective of steadying the down hole tool is to hole the seismic tool immobile and in contact with the formation, the bow spring provides the necessary horizontal tension against the seismic tool to force the seismic tool against the borehole wall. When the downhole tool is raised or lowered to another level, it will immediately be ready for another shot because the bow spring does not contract and merely slides along the walls of the borehole. Thus, time is saved because there is no waiting for pads to pressurize or depressurize or for a cable to go slack or taunt. Further, the greater length of the downhole tool makes it possible to place multiple bow springs on the downhole tool.

Another advantage of combining seismic and logging tools is that data from both the check shot survey and the VSP may be correlated to depth with greater accuracy. Also, the seismic tool may be correlated in depth with the logging tool because the two are physically attached. A problem in the prior art has been that as a seismic tool is lowered into a borehole the cable stretches and bounces, making the seismic measurements less accurate in terms of depth. Even when a measuring wheel is used, inaccuracies remain because of the stretching or slipping of the cable. Correlation of the depths from a seismic tool with the depths taken by a logging tool is also made difficult because the tools are being used on different cables at different times. However, the present invention measures the depth of the seismic tool during the logging operation so that the depth of the seismic tool can be correlated to the more accurate depths determined during the logging operation.

It is difficult to correlate the location of seismic tools with the actual depth of the borehole, because the depth of the seismic tool can only be determined from certain physical parameters, namely, a measuring wheel and the use of magnetic marks on the cable. The magnetic marks are placed every hundred feet along the cable as it is being lowered into the borehole. As the cable is stretched out, these marks will become farther apart.

Thus, when the cable is withdrawn, the distance between the magnetic marks is measured again to see how much the cable has stretched and the depth given by the measuring wheel is adjusted accordingly. No indication of the depth of the tool is available other than that which can be obtained from measuring the cable in this manner.

The ability to simultaneously run logging operations while the seismic tool is downhole allows for accurate correlation of the depth of the tool with the actual depth of the borehole because the logging operation gives precise information as to depths in the borehole. These depths are determined during the initial logging operation, which is performed very carefully to obtain accurate depth measurements of the logging tool. Thus, in a later trip into the borehole with a downhole tool in which a seismic and logging tool are connected together the logging tool can be activated and the readings compared to the prior logs to find the depth indicated from the prior log. This depth data is most commonly obtained with a gamma ray logging tool, which is very accurate in depth.

Correlating the depth data collected during the logging operation with the seismic data from the seismic survey creates an added advantage in that the data generated by the two operations can be integrated. For instance, the velocity of seismic waves through an interval of the borehole can be used to correct logs for that interval which are affected by density, porosity and sonic travel time. The logs may be inaccurate at some points due to bad hole conditions.

It is, therefore, an object of the present invention to provide a method for taking log measurements and seismic readings comprising connecting both a logging tool and a seismic tool to a cable, moving those tools on the cable through a borehole, selectively activating the seismic tool and selectively de-activating the seismic tool and activating the logging tool.

It is a further object of the present invention to provide a tool to be lowered by cable into a borehole comprising a logging tool, a seismic tool connected to the logging tool, an electrical means for selectively switching the seismic tool and the logging tool to an active or an inactive mode.

It is also an object of the present invention to reduce costs of seismic and logging operations by reducing the amount of time, labor and equipment needed to perform seismic and logging operations.

It is a further object of the present invention to simplify the biasing of a seismic tool by adding greater weight to the seismic tool.

It is a further object of the present invention to provide a method and apparatus capable of integrating log and seismic data.

It is a further object of the present invention to provide a method and apparatus able to obtain more accurate readings of the depth of a tool during seismic operations.

It is a further object of the present invention to provide a method and apparatus for taking seismic and logging data which reduces problems with inaccurate depth readings of a seismic tool due to the cable stretching.

These and other objects of the present invention will be clear to those skilled in the art who have the benefit of this disclosure from the description of the preferred embodiment which follows.

## SUMMARY OF THE INVENTION

These objects are accomplished in the present invention by providing a tool for lowering into a borehole on a cable comprising a logging tool, a seismic tool connected to the logging tool, and electrical means for selectively activating and de-activating the seismic tool and the logging tool. Also provided is a method for taking log measurements and seismic readings comprising connecting a logging tool and a seismic tool to a cable, moving the tools on the cable through a borehole, selectively activating the seismic tool, and deactivating the seismic tool and activating the logging tool.

## BRIEF DESCRIPTION OF THE DRAWINGS

Fig. 1 is a schematic view of a preferred embodiment of the method and apparatus of the present invention.

Fig. 2 is a longitudinal sectional view of the seismic tool.

Fig. 3 is a graph of the seismic data obtained by the method of the present invention.

Fig. 4 is a schematic diagram of the electrical circuitry of the seismic tool of the apparatus of the present invention.

Fig. 5 is a schematic diagram of the switching circuitry of Fig. 4.

## DESCRIPTION OF THE PREFERRED EMBODIMENT

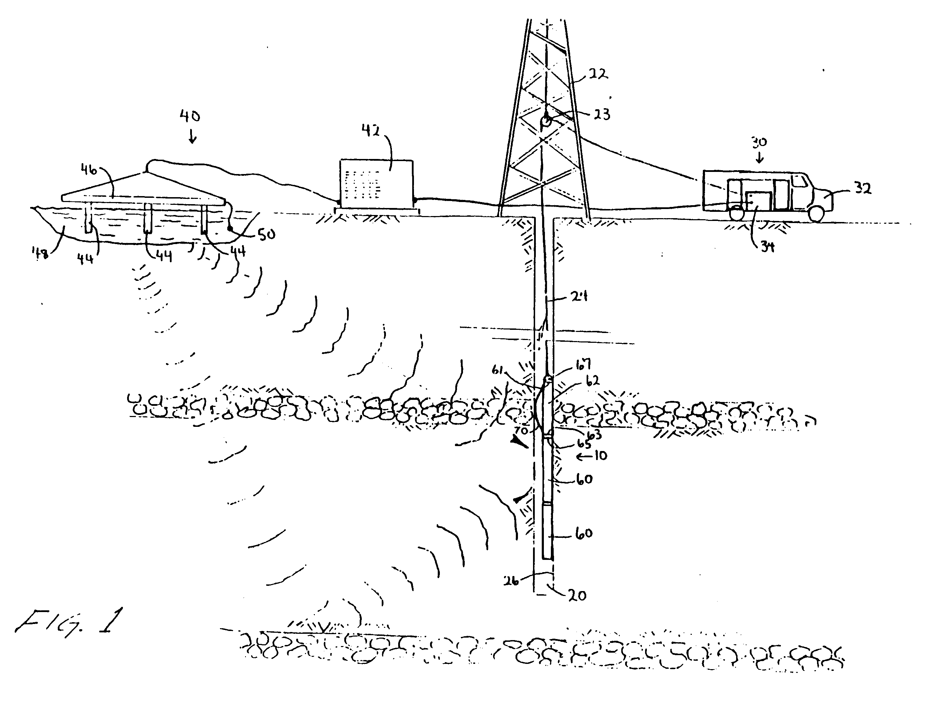

In Fig. 1 is shown a schematic diagram of the downhole tool, labelled generally as 10, during logging and seismic operations. The downhole tool is lowered into a borehole 20 while a rig 22 has temporarily ceased drilling activities. The downhole tool 10 is connected by a cable head 67 to a cable 24 which is run through a pulley 23 to a seismic and logging unit, labelled generally as 30. The seismic and logging unit 30 is, in the preferred embodiment, a wireline truck 32 such as is known in the art. Contained within the wireline truck 32 are a cable reel (not shown) upon which the cable 24 is wound and unwound and a measuring wheel (not shown) for estimating the depth of the downhole tool 10. The cable 24 is electrically connected to the seismic and logging processing equipment, indicated generally at reference numeral 34, which performs the various seismic, logging and data processing functions known in the art. The seismic and logging equipment 34 which may be used in the preferred embodiment is the Cyber Service Unit used by Schlumberger Well Services for both logging and seismic operations.

A seismic source, indicated generally at 40, is provided on the earth's surface. The seismic source 40 is, in the presently preferred embodiment, comprised of an air compressor 42 such as is known in the art, and a plurality of air guns 44 mounted on a spreader bar 46 which has been lowered into a seismic pit 48. A hydrophone 50 is also lowered into the seismic pit 48 and is connected back to the seismic and logging equipment 34 to detect the firing of the air guns 44 and to start a timer (not shown). The air guns 44 may be a single air gun or a combination of air guns 44 known in the art. The air guns 44 and the hydrophone 50 are connected to the compressor 42 and to the logging and seismic equipment 34 by hoses and cables such as are known in the art.

The downhole tool 10 is comprised of one or more logging tools 60 connected to a seismic tool 62. In a preferred embodiment, several logging tools 60 may be connected in a string below seismic tool 62, the logging tools 60 being standard logging tools 60 such as are known in the art. For example, a density logging tool, a neutron logging tool and/or a gamma ray logging tool may be used.

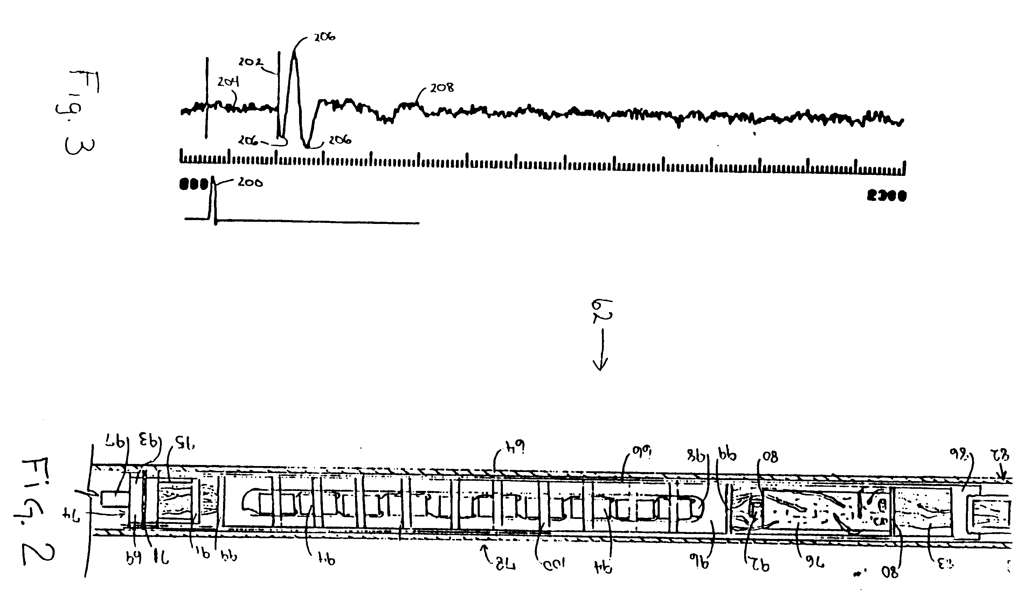

The seismic tool 62 operates best when there is no interference from logging operations, because vibrations in the downhole tool 10 caused by some logging tools 60 cause interference with the reception of seismic waves by the geophones. Similarly, the logging tools have difficulty functioning properly during seismic operations, because the seismic waves cause the logging tools to vibrate, which interferes with the operation of the highly sensitive log measuring instruments. Therefore, the seismic tool 62 is provided with electrical means, shown in Figs. 2, 4 and 5, activated electrically by signals carried by the cable 24 from the seismic and logging equipment to selectively activate the seismic tool 62 while the logging tools 60 are deactivated. The electrical means can also be activated in the same manner described to deactivate the seismic tool 62 and activate the logging tools 60.

A bow spring 70 is attached to the exterior of the seismic tool 60, although it is understood that the bow spring 70 could be attached at other places on the exterior of the downhole tool 10, or that more than one bow spring 70 could be used. The bow spring 70 is provided with sufficient arc to provide horizontal force sufficient to cause the seismic tool 62 to engage the walls 26 of the borehole 20. However, the bow spring 70 is not so stiff that the weight of the downhole tool 10 will not overcome the resistance of the bow spring 70. In fact, as mentioned, the downhole tool 10 is relatively heavy because of the number of tools attached, so that vertical movement is dampened and only horizontal tension is required. Therefore, when the cable 24 is loosened, the weight of the downhole tool 10 will allow it to be lowered into the borehole 20. However, as soon as the cable 24 is stopped, the tension in the bow spring 70 is sufficient to fix the downhole tool 10 against the wall 26 of the borehole 20. The force of the bow spring 70 is sufficient to bias the downhole tool 10 into adequate contact with the wall 26 of borehole 20 to facilitate taking the seismic readings.

Referring to Fig. 2, the seismic tool 62 is shown in more detail. The seismic tool 62 is comprised of a housing 64 which seals and protects the interior of the seismic tool 62. The housing 64 is a standardized tool housing such as is known in the art. The housing 64 is provided with a male coupler 63 and a female coupler 61 (shown in Fig. 1 in schematic), respectively, at either end thereof such as is known in the art. The female coupler 61 is attached to a cable head 67. The male coupler 63 connects to a matching female coupler 65 of a logging tool 60.

Referring again to Fig. 2, within the housing 64 is the cartridge body 66. The cartridge body 66 may be of any suitable form as is standard in the art. The cartridge body 66 has at either end first and second air and fluid tight connectors 68 and 69, respectively, which engage the interior walls of the housing 64. O-rings 71 provide an air tight and fluid tight seal around the first and second connectors 68 and 69. Within the first connector 68 nearest the cable 24 is a first 31-pin connector 72. The first 31-pin connector 72 is a standard item known in the art. A second 31-pin connector 74 is provided within the second connector 69.

The first 31-pin connector 72 is connected to the cable 24 through cable head 67. The cable 24 is an eight line cable such as is known in the art.

The interior of the cartridge body 66 has two major components, a circuit board 76 mounted to the interior of the cartridge body 66, and a geophone array 78 also mounted to the interior of the cartridge body 66. The circuit board 76 is mounted on brackets 80 by screws (not shown).

The first connector 68 is comprised of a hollow cartridge body collar 82 which is mounted to the interior wall of the cartridge body 66. Wires 83 pass from the first 31-pin connector 72 to the circuit board 76 for electrical connection to the seismic tool 62 or to the second 31-pin connector 74 for electrical connection to the logging tools 60. The cartridge body collar 82 has a spring loaded member 84 which is slidably mounted on a spring loaded member collar sleeve 88. The sleeve 88 protrudes from a cartridge body collar base 86 which is mounted on the interior of the cartridge body 66. A spring 90 is interposed between the spring loaded member 84 and the cartridge body collar base 86 along the sleeve 88 so that when the cartridge body 66 is being inserted into or removed from the housing 64, the spring 90 provides flexibility to the connector 68 through the spring loaded member 84 and prevents damage to the wiring or to the first 31-pin connector 72.

The second connector 69 is also hollow so that the wires 83 can pass from the second 31-pin connector 74 to the circuit boards 76, the geophone array 78, or the first 31-pin connector 72. As will be explained later, some of the wires 83 travel directly from the first 31-pin connector 72 to the second 31-pin connector 74. The second connector 69 attaches to the interior wall of the cartridge body 66 at a second connector flange 91. The second connector flange 91 is integral with side members 95, which are a portion of a second connector collar 93 that has been cut away on the sides. A second connector post 97 protrudes towards the logging tool 60 for purposes of engaging the interior of the housing 64 and holding the cartridge body 66 in place.

The geophone array 78 is, in the preferred embodiment, a series of thirty transducers, or geophones, 94 mounted within a geophone housing 96. The geophone housing 96 has a slotted cavity 98 on three sides with ten geophones 94 mounted in each slotted cavity 98. The geophones 94 are held within the slotted cavity 98 by a band 100 which circles the geophone housing 96. The geophones 94 are wired (not shown) in a series-parallel group arrangement of 15 geophones each. However, the geophone array 78 may be any geophone array such as is known in the art. The resistance of each group of 15 geophones is on the order of 10,800 ohms ± 5%. The geophone array 78 is mounted within the cartridge housing 66 by geophone brackets 99 which clamp to either end of the geophone housing 96.

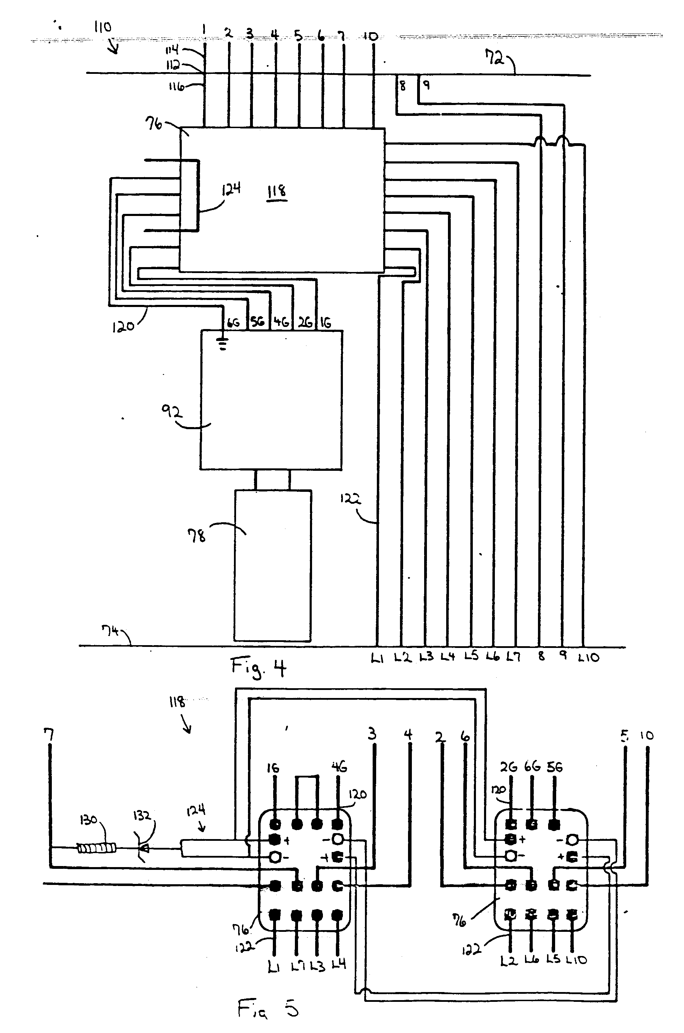

In Fig. 4 is shown the electrical circuitry 110 which controls the basic operations of the downhole tool 10. The first 31-pin connector 72 is represented by a line and shows that ten of the pins 112 are used to connect the cable lines 114 to ten seismic tool lines 116. Two of the cable lines 114 (numbers 8 and 9) are connected to seismic tool lines 116 which bypass the circuit boards 76 and the geophone array 78 and are connected directly with the second 31-pin connector 74. Lines 8 and 9 are used as straight through signal lines, so there is no need for these lines to pass through the circuit board 76. Lines 1 through 7 and 10 of the seismic tool lines 116 are connected to a switching circuit 118. The switching circuit 118 provides the switching operations for the downhole tool 10. The switching circuit 118 is connected to an amplifier circuit 92, such as is known in the art, which is in turn connected to a geophone array 78.

The switching circuit 118 detects a signal from the logging and seismic equipment 34 which determines whether the logging tool 60 or the seismic tool 62 is to be activated. Although the presently preferred embodiment is provided with electrical circuitry 110, which turns the logging tool 60 and seismic tool 62 to an active and inactive mode alternatively, it is understood that the seismic 62 and logging 60 tools can be activated concurrently. Thus, the terms "activate" and "deactivate" are used instead of "off" and "on", because it is desired to selectively collect data from each of the seismic 62 and logging 60 tools rather than selectively disable them.

Switching circuit 118 is shown in detail in Fig. 5. Switching circuit 118 receives a signal from the logging and seismic equipment 34 through line 7 which determines whether the switching circuit 118 will activate the geophone cartridge lines 1G, 2G, 4G, 5G and 6G or whether it will activate the logging tool lines L1 through L7 and L10. If the geophone lines 120 are activated, power flows to the switching circuit 118, which receives signals from the geophone array 78 through the amplifier circuit 92. If the switching circuit 118 activates the logging lines 122, then power flows to the logging tool 60 through logging lines L1 through L7 and L10. As mentioned, line 7 is used to determine the switching of a relay 124 contained within the switching circuit 118.

Switching circuit 118 receives power from the various logging lines 116 numbered 1-7 and 10. The logging lines 116 are connected to the circuit board 76. Line 7 of the logging line 116 is provided with a coil 130 connected to a zener diode 132 to insure that the seismic tool 62 will be compatible with the logging tools 60. As can be seen, normally the seismic tool lines 116 would connect directly with the logging lines 122 and flow power directly to the logging tool 60. However, when a positive 15 volt direct current pulse is sent down line 7, the direct current will pass through the coil 130 and zener diode 132 to activate a relay 124 so that current and signals flow through the geophone lines 1G, 2G, 4G-6G. When a negative 15 volt pulse is sent down line 7 by a command from the logging and seismic equipment 34, the relay 124 will switch off the current flow from the geophone lines 120 and switch the current flow to the logging lines 122.

The operation of a downhole tool 10 will now be described. The seismic tool 62 is attached to logging tool 60 and attached to a cable 24 to be lowered into the borehole 20. The cable 24 is run over the pulley 23 to facilitate lowering of the downhole tool 10. The cable 24 is connected to the seismic and logging equipment 34 within the wireline truck 32. The wireline truck is also connected to the compressor 42, air guns 44 and hydrophone 50 to prepare the air guns 44 for firing.

There are a variety of methods in which the downhole tool 10 may be used. In the presently preferred embodiment, the downhole tool 10 performs seismic operations as the downhole tool 10 is lowered down into the borehole 20 and logging operations on the way back to the surface. For instance, in the case of a check shot survey, downhole tool 10 is lowered to a predetermined depth as shown by a measuring wheel (not shown). A seismic shot is fired by the air guns 44 and received by the seismic tool 62, and the information transferred through the cable 24 to the seismic and logging equipment 34. The procedure is repeated at successively lower depths. Alternatively, seismic tool 62 can be activated through the switching circuit 118, and logging tools 60 are activated. Then, a log is run of the particular point in the borehole where the downhole tool 10 has stopped. This log is then compared with logs previously run in the borehole which have accurate depths to obtain a more accurate measure of the depth.

As mentioned earlier, depth data from logging runs is generally very accurate because the initial logging of a borehole 20 is performed very carefully by centering the measuring wheel (not shown) both on the surface and on the bottom of the borehole 20 and by compensating for cable stretching by using magnetic markings at spaced intervals entering the borehole 20 and measuring the change in the spaced intervals as the cable 24 is rewound. However, the method and apparatus of the present invention allow additional correlation of the depth data by comparing the later logs to the initial log to find the depth of the particular formation to which downhole tool 10 is adjacent, after which downhole tool 10 can be raised or lowered to locate the desired depth. Because the downhole tool 10 can be up to 15,24m or 18,29m (50 or 60 feet) long, compensation needs to be made for the difference in depth of the seismic tool 62 as compared to the lower logging tool 60. Due to the fact that the seismic 62 and logging 60 tools are connected, this depth difference is a known constant. After initial adjustment of the depth of seismic tool 62, the depth indicated by the measuring wheel (not shown) can be relied on for the remainder of the seismic operation.

It may be desirable to perform some logging operations on the way down into the borehole 20 in case the downhole tool 10 becomes stuck or lost in the borehole 20. The loss of the downhole tool 10 is not a frequent event, but it may be prudent to have at least some logging information before risking the possibility of losing the downhole tool 10. It is also possible to use the downhole tool 10 for vertical seismic profiles (VSP) if desired.

A graphical representation of the data produced by the geophone array 78 of seismic tool 62 is shown in Fig. 3. Peak 200 is the start time, or 000 time, when air guns 44 are fired. Peak 202 of line 204 is the first break, indicating that point in time at which the seismic wave is first received by geophone array 78. Peaks 206 represent the oscillations of seismic wave from break point 202. The peaks 208 downstream of peaks 206 represent successive waves received by geophone array 78 as is known in the art.

A further operation made possible by the present invention is the integration of seismic and log data made possible by the depth correlation techniques mentioned above. Since the seismic readings can be fixed with certainty in depth in relation to the logging readings, certain types of logging readings may be adjusted to eliminate errors in the logs. For example, logs which are greatly affected by the density/porosity of the formation or by sonic travel time through a formation may be corrected because data from the seismic operations will give accurate readings of the velocity of seismic waves through the same interval. Thus, the logs can be corrected using techniques known in the art.

Although the invention has been described in the above preferred embodiment, it is understood that a number of modifications and variations could be made which should fall within the scope of the present invention. The scope of the present invention is determined by the following claims.

## Claims

1. A downhole tool for lowering into a borehole comprising:
    a logging tool;
    a seismic tool connected to said logging tool;
    electrical means for selectively switching said seismic tool and said logging tool to an active or an inactive mode.

2. The downhole tool of claim 1 wherein:
    said seismic tool comprises a plurality of geophones.

3. The downhole tool of claim 1 further comprising:
    a bow spring mounted to the exterior of said seismic tool to bias said downhole tool against the side of the borehole.

4. A method for taking log measurements and seismic readings comprising:
    connecting a logging tool and a seismic tool to a cable;
    moving said tools on said cable through a borehole;
    selectively activating said seismic tool; and
    de-activating said seismic tool and activating said logging tool.

5. The method of claim 4 wherein:
    said seismic tool is selectively activated by sensing a current passed by said cable to said downhole tool and activating said seismic tool or said logging tool depending on the type of current passed.

6. The method of claim 4 additionally comprising:
    biasing said tools towards the wall of said borehole while moving said tools through said borehole.

7. The method of claim 4 wherein:
    said seismic tool is correlated in depth during activation by locating a known depth with said logging tool and moving said seismic tool to said known depth.

8. The method of claim 4 wherein:
a check shot survey is performed during activation of said seismic tool.

9. The method of claim 4 wherein:
a vertical seismic profile is performed during activation of said seismic tool.

10. The method of claim 4 wherein:
said seismic tool is activated while said seismic tool is being moved downwardly in said borehole and said logging tool is activated while said seismic tool is being moved upward in said borehole.

**Revendications**

1. Outil de descente dans un forage destiné à être descendu dans un sondage comportant :
un outil de diagraphie ;
un outil sismique connecté audit outil de diagraphie ;
un moyen électrique pour commuter sélectivement ledit outil sismique et ledit outil de diagraphie vers un mode actif ou un mode inactif.

2. Outil de descente dans un forage selon la revendication 1, dans lequel :
ledit outil sismique comporte une pluralité de géophones.

3. Outil de descente dans un forage selon la revendication 1, comportant en outre :
un ressort à arc monté vers l'extérieur par rapport audit outil sismique pour pousser ledit outil de descente dans un forage contre la paroi du sondage.

4. Procédé pour effectuer des mesures de diagraphie et des lectures sismiques, comportant les étapes qui consistent :
à connecter un outil de diagraphie et un outil sismique à un câble ;
à déplacer lesdits outils avec ledit câble à travers un sondage ;
à activer sélectivement ledit outil sismique ; et
à désactiver ledit outil sismique et à activer ledit outil de diagraphie.

5. Procédé selon la revendication 4, dans lequel :
ledit outil sismique est activé sélectivement en détectant un courant qui circule le long dudit câble vers ledit outil de descente dans un forage et à activer ledit outil sismique ou ledit outil de diagraphie en fonction du type de courant qui circule.

6. Procédé selon la revendication 4 comportant en outre l'étape qui consiste :
à pousser lesdits outils vers la paroi dudit sondage tout en déplaçant lesdits outils à travers ledit sondage.

7. Procédé selon la revendication 4, dans lequel :
ledit outil sismique est corrélé en profondeur au cours de l'activation en localisant une profondeur connue avec ledit outil de digraphie et en déplaçant ledit outil sismique jusqu'à ladite profondeur connue.

8. Procédé selon la revendication 4, dans lequel :
un relevé de tirs d'essai est effectué en cours d'activation dudit outil sismique.

9. Procédé selon la revendication 4, dans lequel :
un profil sismique vertical est effectué en cours d'activation dudit outil sismique.

10. Procédé selon la revendication 4, dans lequel :
ledit outil sismique est activé pendant que ledit outil sismique est déplacé vers le bas dans ledit sondage et ledit outil de diagraphie est activé pendant que ledit outil sismique est déplacé vers le haut dans ledit sondage.

**Patentansprüche**

1. Ein in ein Bohrloch absenkbares Untertage-Gerät, umfassend:
ein Log-Gerät,
ein mit dem Log-Gerät verbundenes Seismik-Gerät,
elektrische Mittel für selektives Schalten des Seismik-Geräts und des Log-Geräts in einen aktiven oder inaktiven Modus.

2. Das Untertage-Gerät nach Anspruch 1, bei dem das Seismik-Gerät eine Mehrzahl von Geophonen umfaßt.

3. Das Untertage-Gerätnach Anspruch 1, ferner umfassend:
eine Bogenfeder, montiert auf der Außenseite des Seismik-Geräts zum Anpressen des Untertage-Geräts an die Seite des Bohrlochs.

4. Ein Verfahren zum Durchführen von Log-Messungen und Seismik-Ablesungen, umfassend:
Verbinden eines Log-Geräts und eines Seismik-Geräts mit einem Kabel,
Verlagern der Geräte an dem Kabel durch ein Bohrloch,

selektives Aktivieren des Seismik-Geräts, und

deaktivieren des Seismik-Geräts und Aktivieren des Log-Geräts.

5. Das Verfahren nach Anspruch 4, bei dem das Seismik-Gerät aktiviert wird durch Erfassen eines über das Kabel dem Untertage-Gerät zugeführten Stromes und Aktivieren des Seismik-Geräts oder des Log-Geräts in Abhängigkeit vom Typ des zugeführten Stromes.

6. Das Verfahren nach Anspruch 4, zusätzlich umfassend das Anpressen der Geräte in Richtung der Wandung des Bohrlochs, während die Geräte durch das Bohrloch bewegt werden.

7. Das Verfahren nach Anspruch 4, bei dem das Seismik-Gerät während der Aktivierung tiefenkorreliert wird durch Lokalisieren einer bekannten Tiefe mit dem Log-Gerät und Verlagern des Seismik-Geräts zu dieser bekannten Tiefe.

8. Das Verfahren nach Anspruch 4, bei dem während der Aktivierung des Seismik-Geräts eine Prüfschuß-Untersuchung durchgeführt wird.

9. Das Verfahren nach Anspruch 4, bei dem während der Aktivierung des Seismik-Geräts ein vertikales Seismik-Profil durchgeführt wird.

10. Das Verfahren nach Anspruch 4, bei dem das Seismik-Gerät aktiviert wird, während das Seismik-Gerät in dem Bohrloch nach unten bewegt wird, und das Log-Gerät aktiviert wird, während das Seismik-Gerät in dem Bohrloch nach oben bewegt wird.

Fig. 1

Fig. 3

62 →

FIG. 2

Fig. 4

Fig 5